# EUROPÄISCHE PATENTANMELDUNG

(11) **EP 1 306 288 A2**
(43) Veröffentlichungstag der Anmeldung: **02.05.2003**
(21) Anmeldenummer: 02020733.8
(22) Anmeldetag: 14.09.2002
(51) Int. Cl.: B62D 6/00, B62D 131/00, B62D 105/00

(54) **Verfahren zum Stabilisieren eines Mehrspur-Kraftfahrzeugs**

(30) Priorität: 12.10.2001 DE 10150605
(71) Anmelder: Bayerische Motoren Werke Aktiengesellschaft, 80809 München (DE)
(72) Erfinder: Barz, Michael, 82194 Gröbenzell (DE)

(57) **Zusammenfassung**

Die Erfindung betrifft ein Verfahren zum Stabilisieren eines Mehrspur-Kraftfahrzeugs, wobei ein durch Bremsvorgänge mit unterschiedlichen Bremskräften an den einzelnen Rädern hervorgerufenes Giermoment, das insbesondere aus dem festgestellten Bremskraft-Unterschied ermittelt wird, durch einen Eingriff in ein regelbares Lenksystem des Fahrzeugs zumindest teilkompensiert wird, und wobei ferner die bei einer Kurvenfahrt auftretende Querbeschleunigung in einer den Kompensations-Lenkwinkel reduzierenden Weise berücksichtigt wird. In die Ermittlung des Kompensations-Lenkwinkels soll nun zusätzlich der Beladungszustand des Kraftfahrzeugs und/oder der ermittelte Reifendruck in den Fahrzeug-Rädern und/oder die Kraftschluss-Ausnutzung an den gelenkten Rädern mit eingehen. Dabei kann der Kompensations-Lenkwinkel über ein Kennfeld oder ein Fahrdynamikmodell bestimmt werden.

## Beschreibung

Die Erfindung betrifft ein Verfahren zum Stabilisieren eines Mehrspur-Kraftfahrzeugs, wobei ein durch Bremsvorgänge mit unterschiedlichen Bremskräften an den einzelnen Rädern hervorgerufenes Giermoment, das aus dem festgestellten Bremskraft-Unterschied ermittelt wird, durch einen Eingriff in ein regelbares Lenksystem des Fahrzeugs zumindest teilkompensiert wird, und wobei ferner die bei einer Kurvenfahrt auftretende Querbeschleunigung in einer den Kompensations-Lenkwinkel reduzierenden Weise berücksichtigt wird. Zum bekannten Stand der Technik wird auf die DE 40 38 079 A1 verwiesen.

Aus der genannten Schrift ist ein mit einem Antiblockierregler ausgerüstetes Kraftfahrzeug mit Einzelradregelung wenigstens an einer Achse bekannt, bei dem das bei unterschiedlichem Fahrbahnreibbeiwert ("µ-split") auf den beiden Fahrzeugseiten bei ABS-Regelung auftretende Giermoment zumindest teilweise dadurch kompensiert wird, dass ein von der Differenz der getrennt eingeregelten Bremsdrücke abhängiger Kompensations-Lenkwinkel am Hinterradlenksystem eingestellt bzw. einem Vorderrad- oder Hinterradlenkwinkel überlagert wird. Dabei ist die Abhängigkeit des Kompensations-Lenkwinkels von der Bremsdruck-Differenz in einem vorgegebenen Bereich kleiner Bremsdruck-Differenzen vom Wert "0" und wächst danach auf einen vorgegebenen Wert an.

Weiterhin wird in dieser Schrift vorgeschlagen, die Querbeschleunigung des Fahrzeugs zu ermitteln und in Abhängigkeit von der festgestellten Fzg-Querbeschleunigung in einer Korrektureinrichtung einen Korrekturfaktor zu ermitteln, der im Bereich kleiner Querbeschleunigungen vom Wert "1" ist und sich mit steigender Querbeschleunigung kontinuierlich auf den Wert "0" verkleinert. Indem der o.g. Kompensations-Lenkwinkel zusätzlich mit diesem sog. Querbeschleunigungs-Korrekturfaktor (multiplikativ) beaufschlagt wird, kann derjenige Anteil des Bremskraftunterschieds zwischen dem kurveninneren Rad und dem kurvenäußeren Rad, der alleine auf der Radlast-Verlagerung bei Kurvenfahrt basiert, quasi eliminiert werden. Für diesen alleine durch Radlast-Verlagerung bei Kurvenfahrt hervorgerufenen Anteil am festgestellten Bremskraftunterschied zwischen dem kurveninneren und dem kurvenäußeren Rad wird de facto kein Kompensations-Lenkwinkel benötigt, da dieser genannte Anteil kein störendes Giermoment hervorruft. Tatsächlich soll durch den genannten Kompensationswinkel lediglich derjenige Anteil des festgestellten Bremskraftunterschiedes, der durch die unterschiedliche Fahrbahnreibbeiwerte ("µ-split") zwischen dem linken und rechten Fahrzeugrad hervorgerufen wird, kompensiert werden.

Weiterhin ist es aus dieser genannten DE 40 38 079 A1 bekannt, dass der ermittelte Kompensations-Lenkwinkel mit einem von der Fahrgeschwindigkeit des Fahrzeugs abhängigen (multiplikativen) Korrekturfaktor beaufschlagt wird, der bei kleinen Geschwindigkeiten vom Wert "0" ist und mit zunehmender Geschwindigkeit auf den Wert "1" anwächst.

Obwohl es somit bereits bekannt ist, verschiedene Einflüsse bei der Bildung eines Kompensations-Lenkwinkels für das durch Bremsvorgänge mit unterschiedlichen Bremskräften an den einzelnen Rädern hervorgerufene Giermoment zu berücksichtigen, sind noch weitere Verbesserungen möglich, die aufzuzeigen sich die vorliegende Erfindung zur Aufgabe gestellt hat.

Diese Aufgabe wird bei einem Verfahren nach dem Oberbegriff des Anspruchs 1 durch die in den kennzeichnenden Teilen der nebengeordneten unabhängigen Patentansprüche 1 oder 2 oder 3 angegebenen Merkmale gelöst. Bevorzugt wird dabei der Kompensations-Lenkwinkel über ein Kennfeld oder über ein Fahrdynamikmodell bestimmt.

Ein erster Lösungsvorschlag besteht darin, dass in die Ermittlung des Kompensations-Lenkwinkels zusätzlich der Beladungszustand des Kraftfahrzeugs mit eingeht. Das aktuelle Fahrzeuggewicht bzw. die aktuelle Fahrzeugmasse, das/die sich aus dem Leergewicht und der jeweiligen Zuladung ergibt, ist von nicht zu vernachlässigenden Einfluss auf die Verteilung der Radlast zwischen den kurveninneren und den kurvenäußeren Rädern. Dabei ist dieser Einfluss aus der Querbeschleunigung heraus nicht ausreichend, zumindest nicht vollständig feststellbar. Insbesondere gilt dies, wenn - wie in der genannten DE 40 38 079 A1 vorgeschlagen ist - die Querbeschleunigung aus einer Abschätzung und nicht durch Messung bestimmt wird.

Was die Ermittlung des Kfz-Beladungszustandes betrifft, so kann diese unterschiedlich erfolgen. Zumindest die Anzahl der Fahrzeug-Insassen kann durch gängige Sitzbelegungserkennung festgestellt werden. Mit bevorzugt ohnehin bereits am Fahrzeug vorhandenen Höhenstandssensoren sind ebenfalls Rückschlüsse auf das aktuelle Fahrzeuggewicht möglich. Darüber hinaus gibt es eine Vielzahl weiterer Möglichkeiten zur Bestimmung der Fahrzeugmasse und insbesondere auch zur Bestimmung einer ggf. vorhandenen Fahrzeug-Dachlast, die für den vorliegenden Fall von besonders großer Bedeutung ist, welche jedoch nicht Gegenstand der vorliegenden Erfindung sind. Wesentlich ist vielmehr, dass bei einem Verfahren nach dem Oberbegriff des Anspruchs 1 überhaupt der Beladungszustand des Kraftfahrzeugs berücksichtigt wird.

Ein weiterer Lösungsvorschlag besteht darin, dass in die Ermittlung des Kompensations-Lenkwinkels zusätzlich die Kraftschluss-Ausnutzung an den gelenkten Rädern des Kraftfahrzeugs mit eingeht. Auch die Größe des aktuellen Schlupfs zwischen den gelenkten Fahrzeugrädern und der Fahrbahn ist von nicht zu vernachlässigenden Einfluss für das im Oberbegriff des Anspruchs 1 angegebene Verfahren. Der zur Kompensation des Giermomentes aus den unterschiedlichen Bremskräften notwendige Lenkwinkel ist nämlich stark von der Kraftschluss-Ausnutzung an dem auf Hochreibwert laufenden gelenkten Rad abhängig (vgl. "Kammscher Kreis"). Dabei kann die jeweilige Kraftschluss-Ausnutzung dem Umfangsschlupf gleichgesetzt werden, der auf relativ einfache Weise aus den jeweiligen Rad-Drehzahlen unter Berücksichtigung u.a. der Fahrgeschwindigkeit des Fahrzeugs bestimmbar ist.
Ein weiterer Lösungsvorschlag besteht darin, dass in die Ermittlung des Kompensations-Lenkwinkels zusätzlich der ermittelte Reifendruck in den Fahrzeug-Rädern mit eingeht. Der Einfluss dieser Größe ist demjenigen der aktuellen Kraftschluss-Ausnutzung ähnlich und wirkt sich dabei ebenso wie diese auch auf die Größe des durch die Bremskraft-Unterschiede, die wiederum durch unterschiedliche Fahrbahnreibbeiwerte hervorgerufen werden, hervorgerufenen Giermomentes aus.

Die genannten Größen können dabei auf unterschiedliche Weise in die Bestimmung des Kompensations-Lenkwinkels eingehen. Neben einem einfach realisierbaren (mehrdimensionalen) Kennfeld, das zumindest eine der genannten Größen als Eingangsgröße aufweist, besteht auch die Möglichkeit der Berücksichtigung über ein Fahrdynamik-Modell. Ein derartiges Modell ist (in seiner Allgemeinheit) jedoch nicht Gegenstand der vorliegenden Erfindung. Wesentlich ist vielmehr, dass bei einem Verfahren nach dem Oberbegriff des Anspruchs 1 überhaupt eine der in den kennzeichnenden Merkmalen der Ansprüche 1 oder 2 oder 3 angegebenen Größen berücksichtigt wird.

## Patentansprüche

1. Verfahren zum Stabilisieren eines Mehrspur-Kraftfahrzeugs, wobei ein durch Bremsvorgänge mit unterschiedlichen Bremskräften an den einzelnen Rädern hervorgerufenes Giermoment, das aus dem festgestellten Bremskraft-Unterschied ermittelt wird, durch einen Eingriff in ein regelbares Lenksystem des Fahrzeugs zumindest teilkompensiert wird, und wobei ferner die bei einer Kurvenfahrt auftretende Querbeschleunigung in einer den Kompensations-Lenkwinkel reduzierenden Weise berücksichtigt wird,
**dadurch gekennzeichnet, dass** in die Ermittlung des Kompensations-Lenkwinkels zusätzlich der Beladungszustand des Kraftfahrzeugs mit eingeht.

2. Verfahren nach dem Oberbegriff des Anspruchs 1,
**dadurch gekennzeichnet, dass** in die Ermittlung des Kompensations-Lenkwinkels zusätzlich der ermittelte Reifendruck in den Fahrzeug-Rädern mit eingeht.

3. Verfahren nach dem Oberbegriff des Anspruchs 1,
**dadurch gekennzeichnet, dass** in die Ermittlung des Kompensations-Lenkwinkels zusätzlich die Kraftschluss-Ausnutzung an den gelenkten Rädern mit eingeht.

4. Verfahren nach einem der vorangegangenen Ansprüche,
**dadurch gekennzeichnet, dass** der Kompensations-Lenkwinkel über ein Kennfeld oder ein Fahrdynamikmodell bestimmt wird.
